Europäisches Patentamt

European Patent Office

Office européen des brevets

(11) Publication number: **0 094 999**
**A1**

(12) **EUROPEAN PATENT APPLICATION**

(21) Application number: **82302658.8**

(22) Date of filing: **25.05.82**

(51) Int. Cl.³: **G 01 D 5/36**
**G 01 G 19/12, G 01 B 7/30**
**B 60 Q 1/10**

(43) Date of publication of application:
**30.11.83 Bulletin 83/48**

(84) Designated Contracting States:
**AT BE CH DE FR IT LI LU NL SE**

(71) Applicant: **Freeman, John William Herbert**
**Alders Drive Moons Moat East**
**Redditch Hereford & Worcester B98 0RF(GB)**

(72) Inventor: **Freeman, John William Herbert**
**Alders Drive Moons Moat East**
**Redditch Hereford & Worcester B98 0RF(GB)**

(74) Representative: **Symes, Robert George et al,**
**FORRESTER & BOEHMERT Widenmayerstrasse 4/1**
**D-8000 München 22(DE)**

(54) **Improvements in photoelectric position transducers.**

(57) An interceptor member for use in a position transducer comprises a substrate lamina (13) permeable by light or other radiation and barrier lamina (14) impermeable to said radiation. The barrier lamina (14) has annular window elements (13a1 - 13f) occupying one of a plurality of annular zones (12a to 12f) extending about axis (11) of the interceptor member. Light or other radiation is incident through the window elements (13a1 - 13f) of each zone on respective photo-transistors (19a - 19f). The configuration of the window elements collectively is such as to provide a binary coded digital output which may be of Gray form. The transducer may be utilised in a method of checking vehicle axle loading or providing an output to operate an indicator or adjustment means for levelling vehicle head lights when the vehicle tilts due to varying loads.

FIG 1

Title: "Improvements relating to interceptor members for use primarily in determining vehicle axle loading and methods of manufacture thereof"

A first aspect of the present invention relates to a mask, shutter, or encoder member (herein called an interceptor member) having the general purpose of intercepting a beam of radiant energy, such as electro magnetic radiation which may be in or outside the visible spectrum, and which is required to be variably incident upon a sensing means responsive to the incidence of such beam to generate an electrical signal (which expression includes a series of discrete cyclic or repetitive signals).

One application of the invention is to position transducers by means of which the positional relationship of two relatively movable parts is transduced into an electrical signal, for example a binary digital code. Although this is one of the primary applications of the invention it is to be understood that it is of more general application and may be utilised, for example, in limit switch devices, and controlling devices generally for controlling the operation of apparatus and machines or individual sub-assemblies thereof or for generating signals representing time differentials of displacement, for example speed, acceleration etc.

According to a first aspect of the present invention there is provided an interceptor member which comprises a substrate lamina of material permeable to the radiation which it is required to intercept, and a barrier lamina carried by the substrate lamina and is impermeable to such radiation, the barrier lamina having a window means produced by erosion of the barrier lamina.

The barrier lamina may be formed of a non-metallic material and the barrier lamina may be formed of a metal.

Production facilities already exist for the economic quantity production to high limits of accuracy of electrical printed circuit boards. A typical electrical circuit board also comprises a substrate lamina (of electrically insulating material) and an electrically conductive lamina (almost invariably of metal sheet such as copper), which is subject to errosion to produce the particular conductor configuration required.

The present invention may be efficiently and economically produced utilising production facilities already available for the manufacture of electrical circuit boards.

Thus, a particularly suitable substrate lamina is one commonly employed in the manufacture of electrical printed circuit boards, namely polyester reinforced glass fibre, while a lamina suitable to form the barrier lamina is copper foil such as is commonly utilised in the manufacture of electrical printed circuit boards.

A second aspect of the invention is concerned with a method of making an interceptor member.

According to this second aspect of the invention an interceptor member is made by:

    (a) providing a composite plate which comprises a substrate lamina permeable by the radiation required to be intercepted, and a barrier member impermeable by such radiation and having its exposed face coated with a resist which is responsive to incidence of an image to undergo a change to an erodible condition,

    (b) forming an image on the resist of a configuration such as to define the window means required to render the resist erodible over the area of such window means,

(c) treating the resist with an agent selected to erode said erodible area thereof and expose the required window area of the barrier lamina,

(d) treating the exposed area of the barrier lamina with an agent selected to erode the barrier lamina and form the required window means therethrough.

The dimensional accuracy of the window areas may be improved by providing an enlarged representation of the window area and optically reducing such representation in forming the image on the resist.

Third and fourth aspects of the invention relate respectively to a method of and apparatus for monitoring the axle loading of a vehicle.

The interceptor member of the invention, as herein defined, may be used in such method and in such apparatus, but both the method and apparatus of the third and fourth aspects of the invention are broader in concept and may, if desired, be put into practice without the use of the interceptor member.

According to the third aspect of the invention, a method of monitoring the axle loading of a vehicle comprises determining the relationship between the axle loading of a vehicle wheel and the position of a first part of the vehicle relatively to a second part, between which parts relative displacement occurs in response to application of load to the vehicle, and thereafter determining the position of the first part relatively to the second part under whatever loading is applied for the time being to the vehicle, furnishing an indication as to the magnitude of this axle loading as a function of the positional determination.

The preferred manner of carrying out the method comprises the steps of:

(a) applying a load to the load carrying platform or member of the vehicle;

(b) transmitting the load to the vehicle wheel of which the axle loading is required to be determined while also applying such loading to a load measuring means to determine the value of the axle loading;

(c) applying an electrical position transducer to the vehicle in a manner to determine, in terms of an electrical signal, the position of a first part of the vehicle relatively to a second part, (between which parts relative displacement take place as a function of the axle loading applied), under the loaded condition so that such position is then corelated to the determined value of axle loading;

(d) thereafter determining axle loading under whatever load is applied for the time being to the vehicle by determining the relative position of one of said parts relatively to the other by means of said position transucer.

It would be within the scope of the method to make a single determination of axle loading, and a single determination of relative position between the first and second parts for example at, or in the region of, the maximum axle loading properly to be applied in use of the vehicle to a given wheel. In this case the position transducer would ordinarily be used subsequently to provide an indication of when axle loading, at or in the region of, the maximum permitted value had been reached.

If subsequently values of axle loading were required to be determined over a range of possible loads up to the permitted maximum and utilising the position transducer, then such could be provided by assuming a linear (or other appropriate stress/strain relation) as being applicable to vehicle spring or suspension means controlling relative displacement between the first and second parts in response to the application of load to the vehicle.

If a more accurate determination were required (not assuming a linear or other stress/strain relation), over a range of loads, then the operations specified in sub-clauses (a) to (d) of the preferred manner of carrying out the method could be repeated for different loads and values of axle loading actually determined by the load measuring means, in effect providing a multi-point calibration of the position transducer output in terms of axle loading.

Application of the load from the load carrying platform or member to the vehicle wheel concerned may be effected through a strut means which relieves the vehicle suspension of loading, or a predetermined proportion thereof, and axle loading may be determined by measuring the loading of the strut means. Thus, the measurement may be carried out by using a pressure fluid ram or capsule as the strut means and measuring the pressure of the fluid therein.

According to the fourth aspect of the invention there is provided apparatus for determining vehicle axle loading comprising, an electrical position transducer having attachment means for operatively connecting it between a first part and a second part of the vehicle, between which parts relative displacement takes place in response to loading of the vehicle applied, and providing an electrical output signal, and indicator means responsive to the output signal of the transducer, and providing an indicator signal representative of axle loading by virtue of preceding calibration between relative position of the two parts and axle loading providing such relative position.

The position transducer may comprise:

(a) a sensing means responsive to the incidence of a radiant energy beam to provide primary output signal;

(b) illumination means providing such a beam;

(c) an interceptor member controlling incidence of the beam on the sensing means;

(d) mounting means providing for relative displacement between the interceptor member and the beam in a direction transversely of the latter; and

(e) input means for receiving and transmitting to the interceptor member a displacement corelated to that occuring relatively between the first and second members of the vehicle so as to establish a predetermined output signal for a predetermined axle loading.

Preferably, the interceptor member is of the form in accordance with the first aspect of the invention and/or is made by the method in accordance with the second aspect of the invention as herein defined.

Thus, the sensing means may be of such form, and the window means of the barrier lamina may be of such a configuration, as to generate a binary coded digital output at output terminals of the sensing means.

To provide reliable change from any given binary coded number to that next in sequence, the configuration of the window means may be such that the digital output from the sensing means is coded in Gray form (that is successive bytes of the code differ only by a single bit), and the apparatus includes means for converting the Gray coded output to another digital coded output (such as binary).

Alternatively, the sensing means may be of such form, and the configuration of the window means may be such as to generate a binary coded output at output terminals of the sensing means in which certain digital outputs for successive bytes do not necessarily involve change of only a single bit, and change from any given binary coded number to that next in sequence may be controlled by the output signals from a first sensor element of the sensing means, providing the least significant bit of the output signal, and a supplementary sensor element of the sensing means in the path of that zone of the window means effective relative to the least significant bit but spaced therefrom along the path of displacement of the interceptor member by such an amount as to provide a unique change over point of operation. This form of the invention may be employed for example when it is desired to use a form of sensing means and window configuration providing a binary coded decimal output.

The outputs of both sensors may be combined by a circuit or circuit element operating in an exclusive OR mode to effect such control. Generally it is convenient to use a spacing of $(n + \frac{1}{2}) \times d$ where n is a whole number and d is displacement of the interceptor member to provide circuit change of the least significant digit.

A further aspect of the invention is concerned with control as to the angular position in elevation of vehicle lamps (herein called driving lamps) and each providing a forwardly directed beam for illuminating the roadway ahead of the vehicle.

At present such driving lamps can be moved angularly by manually (or by foot) controlled dipping means between a normal full beam or "up" position in which the beam is substantially parallel to a longitudinal horizontal reference plane tangential to the road engagement points (areas) of the vehicle wheels and a "dipped" position in which the beam is inclined downwardly in a forward direction at an angle such as to reduce dazzle to the drivers of approaching vehicles (and is normally also reduced in intensity).

In both positions increased dazzle can be caused to the drivers of mutually approaching vehicles if the axle loading of either vehicle is such as to produce an upward tilt of the vehicle and hence upward tilt of the the driving lamp or each of same in a direction from rear to front of such vehicle, relatively to the reference plane.

According to the fifth aspect of the invention there is provided means for sensing upward tilt of the vehicle relatively to said reference plane and for providing a control signal in response thereto, and corrective means responsive to said signal for bringing about, or indicating the necessity for making a corrective adjustment to, the angular position of the vehicle lamps.

The means for sensing the upward tilt may comprise position transducers applied respectively to front and rear wheels of the vehicle. Outputs from such position transducers may be fed to the comparator means providing an output representing tilt. Such output may control the operation of corrective adjustment means or the operation of indicator means which indicate to the vehicle driver or attendant the requirement for effecting manual adjustment of the or each driving lamp.

The various aspects of the invention will now be described by way of example, with reference to the accompanying drawings, wherein:-

FIGURE 1 is a view in front elevation of one embodiment of an interceptor member in accordance with the invention and made by the method thereof, together with a sequence of views in edge elevation illustrating the method of manufacture;

FIGURE 2 is a schematic diagram illustrating a method of calibrating a position transducer for determining vehicle axle loading and one embodiment of apparatus for carrying out the method;

FIGURE 3 is a view similar to Figure 2 illustrating an alternative method and embodiment of apparatus;

FIGURE 4 is a schematic circuit diagram of part of the apparatus of Figure 2 or Figure 3;

FIGURE 5 is a schematic circuit diagram of one channel of the apparatus illustrated in Figure 4;

FIGURES 6, 7, 8 are schematic circuit diagrams showing an alternative form of one channel of the apparatus illustrated in Figure 4;

FIGURE 9 is a schematic circuit diagram showing one form of display means which may be used in the apparatus of Figure 4;

FIGURE 10 is a schematic diagram in side elevation of one embodiment of vehicle and apparatus for controlling angular adjustment of the driving lamps thereof.

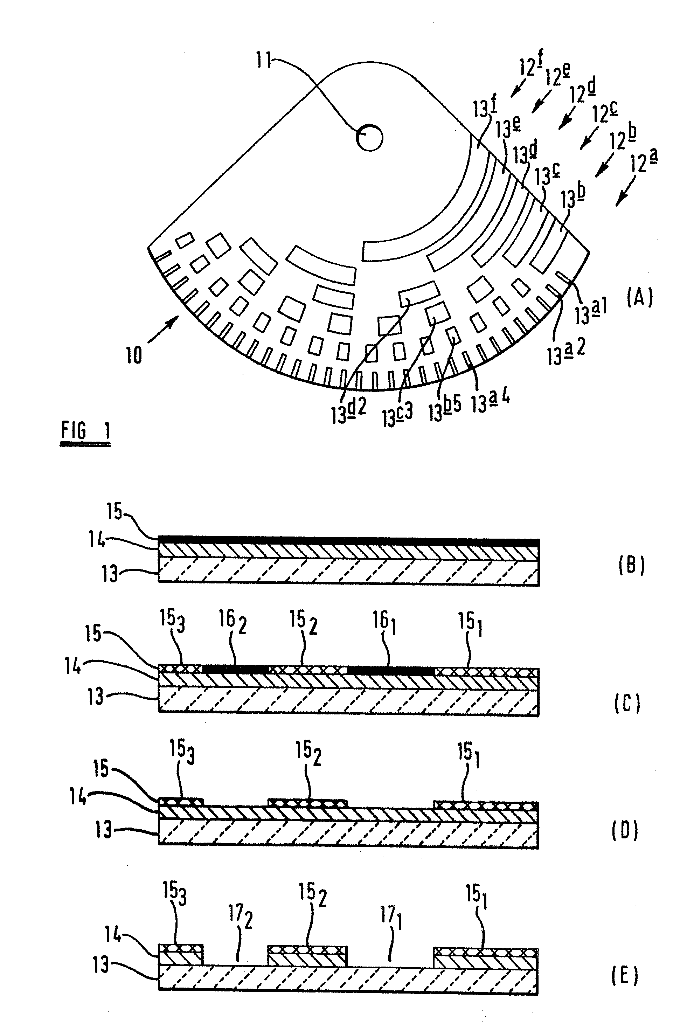

Referring firstly to Figure 1 and the views A to E thereof, the interceptor member therein illustrated is intended to form part of a position transducer. Such interceptor member 10 is of plate-like form and when incorporated in a position transducer would be mounted on the body or supporting means thereof for pivotal movement in its own plane about an axis 11, the position transducer including an array of light sources such as light emitting diodes (LED's) disposed closely adjacent to one face of the interceptor member and an array of photo sensitive elements (such as photo transistors) in corresponding positions adjacent to the opposite face of the interceptor member.

Thus, in the embodiment illustrated, the interceptor member has six annular zones 12a to 12f, a pair of elements, one providing a light source and the other a light responsive electrical output would be disposed at opposite faces of the interceptor member in each of the zones.

Constructionally the interceptor member comprises, as seen particularly in view E of Figure 1, a substrate or supporting lamina 13 made from a material which will permit of transmission therethrough of the radiant energy which stimulates the light responsive element or elements employed. The term light is used herein to denote radiation above, within, and below, the visible spectrum. In some cases, light within the visible spectrum may be used without detriment, but in other cases, where extraneous visible light sources might interfere with the proper operation of the position transducer or other application of the interceptor member, a light source providing radiation outside the visible spectrum, for example in the infra-red spectrum, may be used.

A substrate lamina 13 which is suitable for a wide variety of light sources is one composed of polyester reinforced glass fibre. This thickness thereof is not critical but is determined by strength and stiffness requirement would typically be about 0,5 to 1.0 millimetres thickness.

Carried by the substrate lamina 13 is a barrier lamina 14. It is preferred that this be made of metal and a particularly suitable metal is copper foil. It may be applied in sheet form to the substrate lamina 13 and caused to adhere thereto in any suitable manner such as by the use of an adhesive or by applying it to the substrate lamina when the latter is in a physical state to enter into an adherent or bonded relation with the foil. Typically, when copper foil is employed, it would have a thickness of 0.002 to 0.003 millimetres.

The interceptor member includes window means, which in the embodiment illustrated, comprise annular window elements of varying lengths in each of the zones 12a to 12f. Typical window elements in the zone 12a are indicated in successive positions at 13a1 and 13a2 with corresponding designations for the other zones 12b to 12f. The window means illustrated provide outputs from the six light responsive elements in the zones 12a to 12f in accordance with a binary coded decimal output but other configurations of window means may be utilised. For example, some advantages are achieved by the use of a Gray coded output as hereinafter specifically mentioned. Also different uses of interceptor member in accordance with the invention and other forms of window means may be required.

Referring now to the method of making the interceptor member, and referring to view B, the metal foil 14 is initially coated with a resist which is responsive to incidence of an "optical" image to undergo a change such that certain areas of the resist, namely those in which the windows are to be formed in the metal foil, are converted into a form in which they are capable of erosion by a selected agent. The technique is known in the production of electrical printed circuit boards. A typical resist sold under proprietory designations of the Kodak Company Limited may be utilised, namely KPR (chlorinated rubber in xylene base) and KPC (resin in a benzine base).

After degreasing the foil using trichloroethylene, a film of the resist solution is applied either by dipping or brushing, film thickness typically being between 0.0004 and 0.002 millimetres. The composite substrate lamina foil and dried resist coating is then exposed to ultra-violet light through an image forming lens system (or by contact with a negative having the configuration of the window areas required) and the areas exposed to the ultra-violet light become polymerised in which condition they are relatively insoluble to the eroding agent subsequently employed, namely trichloroethylene. These are the areas indicated at $15_1$, $15_2$, $15_3$ in view C, the remaining areas $16_1$, $16_2$ being unpolymerised and potentially soluble to trichloroethylene.

As shown in view D, the exposed surface of the resist is then brought into contact with trichlorethylene preferably by a vapour immersion process, that is to say it is inserted cold into a container of trichloroethylene vapour, and such vapour condenses on it thus having a high degree of purity. The non-polymerised areas are dissolved leaving the resist areas $15_1$, $15_2$, $15_3$ in being.

For improved accuracy, the negative of the window area may be produced to an enlarged scale, for example five to twenty times the scale of the window area ultimately required, and the lens means producing the optical image reduces the object area to the appropriate size, the plane of incidence presented by the resist 15 in View C.

The areas of foil 14 which are exposed through the now removed unpolymerised areas $16_1$, $16_2$ as seen in view D are subjected to etching by an agent, ferric chloride being suitable for copper foil, which will entirely remove the foil in the window areas and produce the windows $17_1$, $17_2$ as shown in view E.

It will be appreciated that the thickness of the various laminae and resist layer has been exaggerated for clarity in views B to E. The fact that the unetched areas of the foil may retain their coating of resist in the polymerised condition is immaterial due to the extreme thinness.

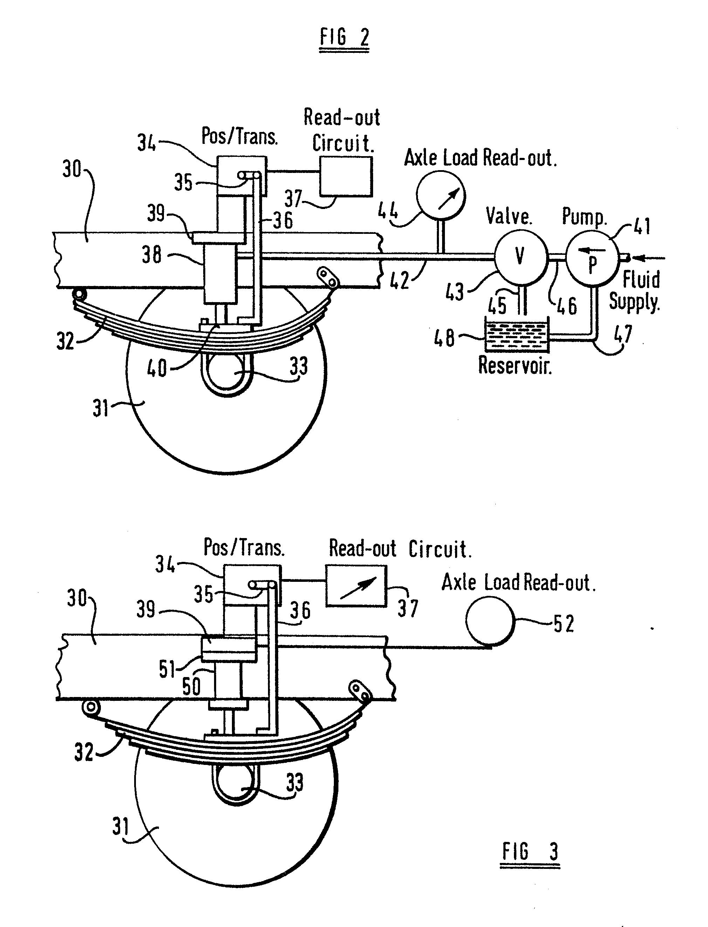

A particular application of an interceptor member such as that described with reference to Figure 1, is to a position transducer providing an electrical signal. Such position transducer may be utilised in a method of, and as part of the apparatus for, determining the axle loading of a motor road vehicle such as a lorry, and the following description relates to such an application of the interceptor member and is illustrated diagrammatically in Figures 2 to 4.

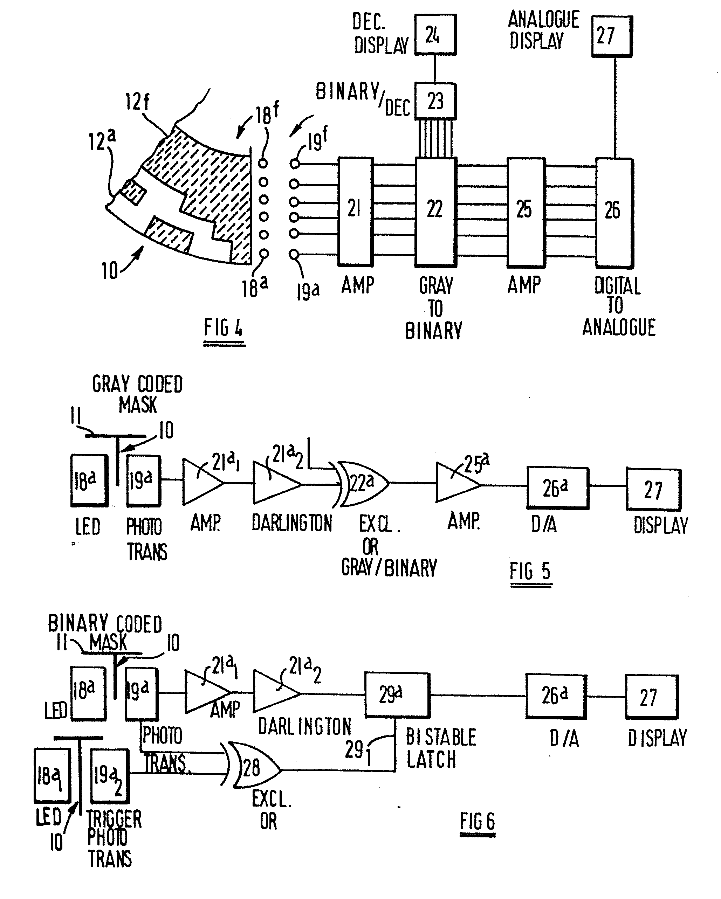

Referring to Figure 4, a portion of the interceptor member 10 is shown for convenience in a frontal view, although in practice it would be mounted for angular movement about an axis co-axial with the concentric annular zones 12a to 12f between an array of light emitting elements such as LED's 18a to 18f and an array of light-sensitive elements such as photo transistors 19a to 19f in a plane perpendicular to the path of light rays between corresponding elements 18a, 19a to 18f, 19f. Each photo-sensitive element 19a to 19f is thus either exposed exclusively to its particular LED 18a to 18f or eclipsed therefrom according to whether the beam is intercepted by a non-window or masking area or passes through a window area of the interceptor member. For convenience in the drawing, only the two outermost zones 12a, 12f are referenced in Figure 4 and only the corresponding pairs of LED's and photo transistors 18a, 19a, 18f, 19f. There may be disposed adjacent to the array of light-sensitive elements 19a-19f a fixed mask having narrow slit-like window areas arranged medially of respective elements 19a to 19f. The movable interceptor member 10 may be disposed closely adjacent to the face of the fixed mask remote from the elements 19a to 19f. This arrangement provides sharp transition from an illuminated to an eclipsed condition in respect of the light responsive elements relative to their illuminating elements 18a to 18f respectively.

The coding provided by the window areas of the interceptor may, as in the illustrated example, be a binary digital coding or it may be a Gray-coded digital output. This latter has the characteristic that change from each value represented by the code to the next successive value entails transition from an illuminated condition to an eclipsed condition in only one of the zones 12a to 12b. When the interceptor element is binary-coded (possibly in accordance with BCD) changes between certain successive "words" or "bytes" each involves multiple changes of state in the zones 12a to 12f and hence in the photo-transistor array 19a, 19f. Unless such changes occur absolutely simultaneously in respect of all those photo-transistors which undergo a change, then momentarily the array will pass through one or more "words" or "bytes" representing a number quite unrelated to the two successive numbers established before and after the change and may give rise to errors. This risk is avoided by the use of a Gray-coded interceptor member.

As shown in Figure 4, the interceptor member 10 is intended to be Gray-coded (only a portion of such code being shown) and the part of the circuitry to the right of the photo transistor array 19a to 19f is of a form which would be 'appropriate to Gray coding of the interceptor member.

Thus, the individual photo transistors 19a to 19f are connected to respective channels containing amplifiers shown as a unit 21. Thereafter the channels feed a conversion circuit Gray-to-binary coding 22 which in turn has channels connected to a binary/decimal converter circuit 23. The latter is connected to a decimal display means 24, for example displaying numerals by way of seven-segment display elements with the segments effectively illuminated.

To provide an analogue display, the output from the converter 22 is also fed to a further amplifier shown as a block 25 but which may contain individual amplifiers in the respective channels. This in turn is connected to a digital to analogue converter circuit 26 providing an output to an analogue display means 27 which may be of the scale and pointer type.

An individual circuit channel is illustrated in Figure 5, this being of a form appropriate to the use of a Gray-coded interceptor member 10 pivotally mounted about an axis 11. As shown, the mask intervenes between light source 18a and photo-sensitive element 19a which feeds integrated circuit amplifier 21a1 and a Darlington pair 21a2. The outputs from all Darlington pairs such as 21a2 are connected to one gate of an exclusive OR gate such as 22a, the other input of which is connected to the next succeeding channel for handling the next highest digit output derived from photo transistor 19b (not shown). The connection would be to the line joining the Darlington pair 21b2 to the input of exclusive OR gate 22b and so on for the series of exclusive OR gates which collectively constitute the unit 22 shown in Figure 4.

The outputs from the exclusive OR gates 22a, 22f collectively form a binary-coded output, the individual signals amplified in amplifier such as 24a and subjected to digital-to-analogue conversion in a converter 26a which again represents merely the part of the converter selectively shown at 26 in Figure 4. Finally, output from all circuits such as 26a feed an analogue display means 27.

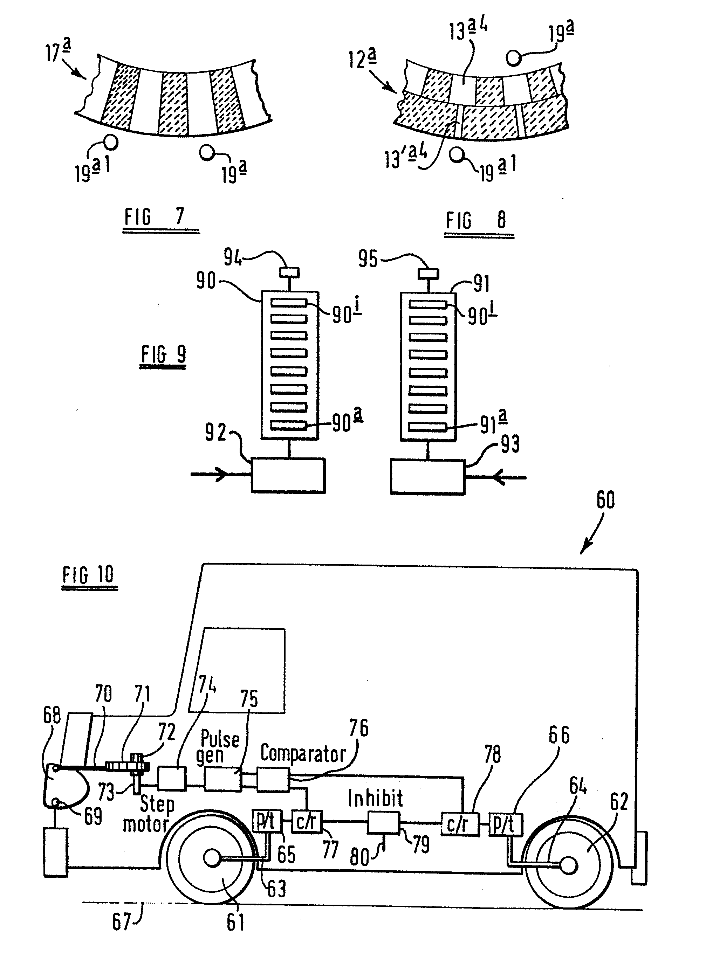

In Figure 6 there is illustrated a single channel again connected to the pair of elements 18a, 19a appropriate to an arrangement where the interceptor member is binary-coded as shown for example in Figure 1. This channel (and all the other channels) include means for avoiding or reducing the difficulties which may arise in transition from one binary-coded number to the next successive number where multiple changes of state of light-sensitive elements in the array 19a to 19f are entailed.

For this purpose, a further light source 18a1, which may be an LED, and further light-sensitive element 19a1 which may be a photo-transistor are provided, with the resultant beam between 18a1 and 19a1 arranged to traverse the annular zone 12a of the interceptor member, but at a position along that path spaced from the pair of elements 18a, 19a by a distance equal to $(n + \frac{1}{2}) \times d$, where n is a whole number and d is the displacement of the interceptor member to provide a circuit change of the least significant digit i.e. equal to the annular length between the centres of successive window areas in zone 12a.

The outputs from elements 19a and 19a1 are connected to the inputs of an exclusive OR gate 28 which will develop a high or "1" at its output only when the inputs from 19a, 19a1 are different, that is "0" and "1" or "1" and "0".

Thus if the element 19a is situated in alignment with the centre of a window area, as shown in Figure 7 (for convenience radially beyond window area although actually behind it) and element 19a1 is situated in alignment with the centre of a masking area in the zone 12a, then theoretically 19a and 19a1 will have the same "spread" of sensitivity in a direction lengthwise of the travel of the interceptor member or mask and 19a will become "0" at exactly the same instant as $19\underline{a}1$ becomes "1". In practice, the "spread" will never be quite the same and consequently there will be an instant of time which both $19\underline{a}1$ and $19\underline{a}$ are both "0" or both "1". However, by providing a bistable circuit $29\underline{a}$, the input $29_1$ which has to be at "1" before there is any transmission through the channel from the Darlington pair $21\underline{a}2$ to the digital-to-analogue converter $26\underline{a}$ the "spread" or variation of position of the interceptor or mask over which $19\underline{a}$ and $19\underline{a}1$ have both undergone a change of state is halved, compared with that which would obtain were the changeover to be determined solely by the changeover time of $19\underline{a}$.

Moreover, if the output from the exclusive OR gate 28 is applied to all of the bistable circuits, such as $29\underline{a}$, operating in channels connected to photo-sensitive elements $19\underline{b}$ to $19\underline{f}$, then the risk of non-coincidental change-over instants in each of the more significant digit channels, and the likelihood of a false digital code being fed transitorally to the digital-to-analogue converters $26\underline{a}$ to $26\underline{f}$ is very much reduced.

A still further refinement can be achieved as illustrated in Figure 8 by splitting the zone $12\underline{a}$ into two sections of which the inner one has window areas, behind which the element $19\underline{a}$ is disposed (for convenience shown at the inner boundary) and an outer section, behind which the element $19\underline{a}1$ is disposed (for convenience shown at the outer boundary). The window areas in the outer section are of reduced width compared with those of the inner section as indicated typically at $13\underline{a}4$ and $13'\underline{a}4$. Accordingly, a "1" state can be established at the output of the exclusive OR gate unit 28 only if photo-sensitive element $19\underline{a}1$ is nearly fully exposed by the narrow window area $13'\underline{a}4$. This still further reduces the likelihood of a false digital code being established in between two correct successive digital codes. As an alternative, the zone $12\underline{a}$ may have window areas across its whole width which are of the narrow form as shown at 13'a4 and these will then generate both the trigger signal from photosensitive element 19a2 and the least significant digit signal from photosensitive element 19a.

Figure 9 shows a particularly simple and clear form of display means which may be employed as the display means 27 for furnishing indication of the axles loading of say two wheels front and rear. The display means comprises two arrays 90, 91 of electrically energised light furnishing elements such as LED's 90a - 90i and 91a - 91i fed from respective driver units 92, 93 receiving analogue inputs (D.C.) on lines 94, 95 from position transducers such as 34, 37 representing axle loads on front and rear wheels.

The driver units are connected to the display arrays 90, 91 in a manner to provide successive energisation of LED's 90a - 90i and 91a - 91i, as the axle loads concerned increase so that the observer sees two increasing height light columns in which individual LED's may register (if desired) with indicator indices representing numerical values of axle load. The driver units may include an adjustable reference voltage (bias) to set the value of input to illuminate the lowest LED, and means for adjusting the sensitivity, i.e. the value of increase of input signal required to effect energisation of the next highest LED. Thus the display can be set up to show the whole of the axle load arising from any given platform load, or a selected proportion, e.g. the top 50% to 80% as desired.

A final indicator element visual and/or audible and responsive to incidence of an input exceeding permitted axle load may be provided as shown at 94, 95 respectively.

In any of the foregoing arrangements transmission of data as to axle loading from the location of a position transducer at a given wheel to a display station, e.g. in the driver's cab, may be simplified by converting a digital binary signal at the output of the position transducer concerned to an analogue signal. The latter can be transmitted to the display means through a cable having no more than three cores instead of the six cores normally required for transmission of digital signals. This is especially advantageous in transmission of data between trailer and towing vehicles or where vehicles include an articulated connection between tractor and load carrying parts.

Referring now to Figure 2 illustrating the use of a position transducer in determining axle load, a vehicle of which a portion of the chassis is indicated at 30 is supported from a road wheel 31 through the intermediary of a suspension means shown as a semi-elliptic leaf spring 32, permitting a first part of the vehicle, namely an axle 33, to undergo vertical displacement relatively to a second part of the vehicle, namely the chassis 30, to an extent which varies according to the load placed on the load carrying platform or member of the vehicle.

A position transducer 34, which may be of the general form described with reference to Figures 4, 5, 6, 7 or 8, is mounted on some suitable part of the vehicle, for example a bracket 39 on the chassis 30, and includes an interceptor member movable angularly by a crank arm 35 which is connected by a pivotal link 36 effectively to the axle 33, so that the angular displacement of the interceptor member partakes of, and is proportional to, vertical movement of the axle 33 relatively to the chassis 30.

The circuitry shown in Figure 4 is represented by the block 37 which provides read-out either by way of a decimal display or analogue display, or possibly by way of simply an alarm signal when the vehicle is subjected to overloading.

Initially, the position transducer is calibrated by interposing a load measuring strut, such as a hydraulic jack 38, between a bracket 39 forming an abutment on the vehicle chassis 30, and an abutment plate 40 strapped or otherwise secured to the axle 33. The jack 38 is connected to hydraulic pump 41 by a pipeline 42 through the intermediary of a manually operable non-return valve 43, and pressure in the hydraulic jack or pipeline 32 is capable of being measured by a load read-out means such as a pressure gauge 44 (which may be calibrated to read load directly, i.e. pressure x jack piston area).

The form of apparatus shown in Figure 2 may be used in accordance with the following procedure. With no load on the vehicle platform fluid may be supplied to the jack 38 so that it engages with little or no force between the bracket 39 and plate 40. In this state the axle load due to the weight of the vehicle alone is borne by the suspension. The position read-out from the transducer is then taken. The valve 43 is then closed and load is applied to the platform and an axle load reading is taken on the gauge 44. In this state the gauge reading is due solely to the increase in axle load caused by the load applied to the vehicle. The valve 43 is then opened allowing the suspension 32 to take all of the axle load (due to both the weight of the vehicle and the load applied to it), and a new position read-out is taken at the unit 37. The difference between the two position read-out values represents the displacement input to the position transducer for the axle load increase brought about by the load applied to the vehicle platform. The "slope" of the displacement versus axle load characteristic can be determined and the read-out of position transducer can be calibrated in terms of axle load. Further, it can be set to "zero", mechanically or electrically in the read-out unit, to correspond to zero axle load. The position transducer does not necessarily have to be so made as to read out over the whole range zero to maximum axle loading or above. It may be satisfactory in some cases for it to read out only over a higher part of the range, for example the top 20%, 30% or 50% with the upper limit being maximum axle loading or some higher selected value, for example 10% above maximum axle loading.

The pump 41 may be a power-driven pump but a hand-operated pump may be used. In some cases the pump may even be omitted altogether if the jack is self extending, e.g. under light spring loading, fluid then being merely sucked in from and exhausted to the reservoir 48.

The procedure would be repeated for all the axles, i.e. individual wheels of the vehicle, each position transducer thus being calibrated.

In many cases it may be legitimately assumed that the suspension means, for example the spring 32, has linear characteristics over the range of displacement (strain) for which axle loading requires to be determined (say 75% of maximum permitted axle loading to maximum permitted axle loading) and the window means provided on the interceptor member 10 will provide a coded digital read-out which changes linearly with respect to angular deflection of the interceptor member, according to whatever code is selected for use.

In some cases, it may be known that the suspension means 32 does not provide a linear stress/strain relation and in that case, the coding incorporated in the interceptor member will require to be of a corresponding non-linear form with respect to angular deflections of this member, although, as before, it may be binary or Gray-coded.

It would be possible for several different readings to be taken, at say one quarter, one half, three quarters and full maximum permitted load for the purpose of enabling a pre-formed interceptor member having a "linear" relation between angular deflection and coded output to be set to provide the most accurate compromise, especially in the region of maximum load.

Having set up or calibrated the position transducer 34, the hydraulic components, namely the jack 38, valve 43, gauge 44, pump 41, reservoir 48 and associated pipework are removed and may be used in calibrating the position transducers provided for the remaining wheels of the vehicle and for other vehicles.

A modified method and form of apparatus is illustrated in Figure 3 in which like parts are designated by reference numerals corresponding to those of Figure 2 and to which the preceding description therefore applies.

In this arrangement, a mechanical jack, such as a screw jack 50, may be utilised, and read-out of axle load when initially transmitting the load through the intermediary of the screw jack on the bracket 39 to the axle 33, may be effected by providing a load cell 51 connected to a read-out means 52. The load cell may be electrical or hydraulic and the read-out means would be of a character appropriate to the output of the load cell.

Instead of measuring axle load, by utilisation of a strut means which effectively by-passes the suspension means, it would of course be possible to run the vehicle wheel onto a weighing means. The zero position of the position transducer would require to be set with the suspension means 32 in an entirely unstressed condition, i.e. the wheel 31 exerting no pressure on the ground, and read-out of the position transducer under the pre-applied axle load would then represent this axle load transformed from a displacement. In all these calibrating operations the vehicle would be resting on level (horizontal) ground.

Referring now to a further application of position transducer means, preferably in accordance with the embodiments already described with reference to Figure 1 and Figures 4, 5, 6, 7 or 8, this is illustrated in Figure 10.

A motor road vehicle such as a lorry 60 has pairs of front wheels, one of the former 61 and one of the latter 62 being shown, and the axles having mechanical connections indicated diagrammtically at 63, 64 to respective position transducers 65, 66 providing outputs representing displacement between a first part of the vehicle, such as the axle concerned, and a second part of the vehicle such as the chassis or an appropriate part of the bodywork fixed in relation to the chassis.

Thus, the outputs of the transducers 65 and 66 besides possibly representing the axle loading, also collectively represent, by reason of the difference between them, the fore and aft tilt of the vehicle as between a horizontal longitudinal reference axis of the vehicle fixed in relation to the chassis, and a reference place 67 taken to be a horizontal surface tangential to the ground-engaging points (areas) of the four road wheels.

The data provided by the transducers 65 and 66 is used to control the angular position of driving lamps, one of which is seen at 68.

For this purpose, each driving lamp is mounted for angular adjustment in a vertical plane, for example pivotally about an axis 69. Such adjustment may be effected manually, for example by means of a manually operable screw and nut means, possibly having a manually operable knob in the driver's cab. As shown diagrammatically however, motor means are provided comprising a link 70 connected to a screw 71 which co-operates with a rotary nut 72 mounted for rotation in an axially fixed bearing and driven through step-down gearing such as a worm and wormwheel mechanism 73 from a drive motor 74.

The motor 74 may be a stepping motor, i.e. driven through an angular displacement in accordance with a number of driving pulses applied thereto.

For this purpose a pulse generator 75 may be provided generating a number of pulses determined by a comparator 76 which receives respective inputs from store or counting registers 78,79. These in turn register counts determined by their respectively associated position transducers 65 and 66.

To prevent continual, and unwanted angular adjustment of the driving lamp 68, an inhibit circuit 79 receiving an input on a line 80 is provided.

The signal provided by the line 80 inhibits incrementing or decrementing of the counting registers or stores 78, 79 whenever the vehicle is in motion. Thus, the signal on the line 80 may be generated from the vehicle speedometer or some other part of the apparatus which is in motion and provides an electrical output whenever the vehicle is moving.

The inhibit circuit 79 may also be connected to a level sensor such that the inhibit signal is removed only when the vehicle is standing on level ground.

The object of the system is to provide automatic adjustment of the driving lamp or each of the driving lamps such as 68, due to variable loading of the vehicle.

Instead of effecting automatic adjustment of the driving lamps 68, output from the comparator 76 may be fed to an indicator means in the driver's cab instructing him to carry out manual adjustment of the driving lamp and indicating the direction and magnitude of adjustment required.

CLAIMS:-

1.  An interceptor member (10) comprising a substrate lamina (13) of material permeable to the radiation which it is required to intercept, and a barrier lamina (14) carried by the substrate lamina (13) and which is impermeable to such radiation, the barrier lamina (14) having a window means (13$\underline{a}$1 - 13$\underline{f}$) produced by erosion of the barrier lamina (14).

2.  An interceptor member according to claim 1 wherein the substrate lamina (13) is formed of a non-metallic material and the barrier lamina (14) is formed of a metal.

3.  An interceptor member according to either of claims 1 and 2 wherein the substrate lamina (13) is formed from polyester reinforced glass fibre and the barrier lamina (14) is formed from copper foil.

4.  A position transducer comprising:
    (a) a sensing means (19$\underline{a}$ - 19$\underline{f}$) responsive to the incidence of a radiant energy beam to provide primary output signal;
    (b) illumination means (18$\underline{a}$ - 18$\underline{f}$) providing such a beam;
    (c) an interceptor member (10) according to any one of claims 1 to 3;
    (d) mounting means providing for relative displacement between the interceptor member (10) and the beam in a direction transversely of the latter.

5.  A position transducer according to claim 4 wherein the sensing means (19$\underline{a}$ - 19$\underline{f}$) is of such form, and the window means (13$\underline{a}$1 - 13$\underline{f}$) of the barrier lamina (14) is of such configuration, as to generate a binary coded digital output at output terminals of the sensing means.

6.  A method of making an interceptor member (10) comprising the steps of:

(a) providing a composite plate which comprises a substrate lamina (13) permeable by the radiation required to be intercepted, and a barrier member (14) impermeable by such radiation and having its exposed face coated with a resist (15) which is responsive to incidence of an image to undergo a change to an erodible condition,

(b) forming an image on the resist (15) of a configuration such as to define the window means required to render the resist erodible over the area of such window means,

(c) treating the resist (15) with an agent selected to erode said erodible area thereof and expose the required window area of the barrier lamina (14),

(d) treating the exposed area of the barrier lamina (14) with an agent selected to erode the barrier lamina and form the required window means (13a1 - 13f) therethrough.

7.  A method according to claim 6 wherein an enlarged representation of the window area is provided and such representation is optically reduced to form the image on the resist (15).

8.  A method of monitoring the axle loading of a vehicle comprising the steps of determining the relationship between the axle loading of a vehicle wheel (31) and the position of a first part (30) of the vehicle relatively to a second part (33), between which parts relative displacement occurs in response to application of load to the vehicle, and thereafter determining the position of the first part (30) relatively to the second part (33) under whatever loading is applied for the time being to the vehicle, furnishing an indication as to the magnitude of this axle loading as a function of the positional determination.

9.   A method according to claim 8 comprising the steps of:

(a) applying a load to the load carrying platform or member (30) of the vehicle;

(b) transmitting the load to the vehicle wheel (31) of which the axle loading is required to be determined while also applying such loading to a load measuring means (44) to determine the value of the axle loading;

(c) applying an electrical position transducer (34) to the vehicle in a manner to determine, in terms of an electrical signal, the position of a first part (30) of the vehicle relatively to a second part (33), (between which parts relative displacement take place as a function of the axle loading applied), under the loaded condition so that such position is then correlated to the determined value of axle loading;

(d) thereafter determining axle loading under whatever load is applied for the time being to the vehicle by determining the relative position of one of said parts (30) relatively to the other (33) by means of said position transducer (34).

10.   A method according to claim 9 wherein the operations specified in sub-clauses (a) to (d) of claim 9 are repeated for different loads, and values of axle loading actually determined by the load measuring means (44), to provide a multi-point calibration of the position transducer output in terms of axle loading.

11.   A method according to any one of claims 8 to 10 wherein application of the load from the load carrying platform or member (30) to the vehicle wheel (31) concerned is effected through a strut means (38, 50) which relieves the vehicle suspension (32) of loading, or a predetermined proportion thereof, and axle loading is determined by measuring the loading of the strut means (38, 50).

12. A method according to claim 11 wherein the application of load is carried out using a pressure fluid ram or capsule (38) as the strut means, and measurement of load is carried out by measuring the pressure of the fluid therein.

13. Apparatus for determining vehicle axle loading comprising, an electrical position transducer (34) having attachment means (36, 39) for operatively connecting it between a first part (30) and a second part (33) of the vehicle, between which parts relative displacement takes place in response to loading of the vehicle, and providing an electrical output signal, and indicator means (37) responsive to the output signal of the transducer, and providing an indicator signal representative of axle loading by virtue of preceding calibration between relative position of the two parts (30, 33) and axle loading providing such relative position.

14. Apparatus according to claim 13 wherein the position transducer comprises:

(a) a sensing means (19a - 19f) responsive to the incidence of a radiant energy beam to provide primary output signal;

(b) illumination means (18a - 18f) providing such a beam;

(c) an interceptor member (10) controlling incidence of the beam on the sensing means;

(d) mounting means (36, 39) providing for relative displacement between the interceptor member (10) and the beam in a direction transversely of the latter; and

(e) input means (36) for receiving and transmitting to the interceptor member (10) a displacement correlated to that occuring relatively between the first (30) and second (33) members of the vehicle so as to establish a predetermined output signal for a predetermined axle loading.

15. Apparatus according to claim 14 wherein the interceptor member (10) is in accordance with any one of claims 1 to 3.

16. Apparatus according to claim 15 wherein the sensing means (19a - 19f) is of such form, and the window means (13a1 - 13f) of the barrier lamina (14) is of such configuration, as to generate a binary coded digital output at output terminals of the sensing means.

17. Apparatus according to claim 16 wherein the configuration of the window means (13a1 - 13f) is such that the digital output from the sensing means is coded in Gray form, and the apparatus (22a) includes means for converting the Gray coded output to another digital coded output.

18. Apparatus according to claim 14 wherein the sensing means (19a - 19f) is of such form, and the configuration of the window means (13a1 - 13f) is such as to generate a binary coded output at output terminals of the sensing means (19a - 19f) in which certain digital outputs for successive bytes do not necessarily involve change of only a single bit, and change from any given binary coded number to that next in sequence is controlled by the output signals from a first sensor element (19a) of the sensing means(19a - 19f), providing the least significant bit of the output signal, and by a supplementary sensor element (19a2) of the sensing means in the path of that zone of the window means effective relative to the least significant bit but spaced therefrom along the path of displacement of the interceptor member by such an amount as to provide a unique change over point of operation.

19. Apparatus according to claim 18 wherein the outputs of both sensors (19a 19a2) are combined by a circuit or circuit element (28) operating in an exclusive OR mode to effect such control.

20. Apparatus according to claim 19 wherein the spacing is $(n + \frac{1}{2}) \times d$ where n is a whole number and d is displacement of the interceptor member (10) to provide circuit change of the least significant digit.

21. Apparatus comprising means for sensing the upward tilt of a vehicle (60) relatively to said reference plane (67) and for providing a control signal in response thereto, and corrective means (70, 21, 72, 73) responsive to said signal for bringing about, or indicating the necessity for making a corrective adjustment to, the angular position of the vehicle lamps (68).

22. Apparatus according to claim 21 comprising position transducers (65, 66) applied respectively to front (61) and rear (62) wheels of the vehicle.

23. Apparatus according to claim 22 wherein the output is arranged to control the operation of corrective adjustment means (70, 71, 72, 73) or the operation of indicator means which indicate to the vehicle driver or attendant the requirement for effecting manual adjustment of the or each driving lamp.

24. Apparatus according to either of claims 22 and 23 wherein the or each position transducer comprises:

(a) a sensing means (19a - 19f) responsive to the incidence of a radiant energy beam to provide primary output signal;

(b) illumination means (18a - 18f) providing such a beam;

(c) an interceptor member (10) controlling incidence of the beam on the sensing means (19a - 19f);

(d) mounting means (63, 64) providing for relative displacement between the interceptor member and the beam in a direction transversely of the latter.

25. Means according to claim 24 wherein the interceptor member is in accordance with any one of claims 1 to 3.

FIG 1

FIG 2

30
34 — Pos/Trans.
Read-out Circuit.
Axle Load Read-out.
35
37
44
39
36
Valve.
Pump.
41
38
42
43
V
P
45
46
Fluid Supply.
32
48
47
40
33
Reservoir.
31

30
34 — Pos/Trans.
Read-out Circuit.
35
36
37
Axle Load Read-out.
39
50
51
52
32
33
31

FIG 3

DEC.
DISPLAY  [24]

ANALOGUE
DISPLAY  [27]

BINARY/DEC  [23]

[19f]

[21]  [22]  [25]  [26]

AMP  GRAY
TO
BINARY  AMP  DIGITAL
TO
ANALOGUE

FIG 4

GRAY CODED
MASK

[18a]  [19a]  [21a₁]  [21a₂]  [22a]  [25a]  [26a]  [27]

LED  PHOTO
TRANS  AMP.  DARLINGTON  EXCL.
OR
GRAY/BINARY  AMP.  D/A  DISPLAY

FIG 5

BINARY CODED
MASK

[18a]  [19a]  [21a₁]  [21a₂]  [29a]  [26a]  [27]

LED  AMP  DARLINGTON  29₁  BI STABLE
LATCH  D/A  DISPLAY

PHOTO
TRANS.

[18a]  [19a₂]  [28]

LED  TRIGGER
PHOTO
TRANS  EXCL.
OR

FIG 6

$17^{\underline{a}}$

$19^{\underline{a}}1$ $19^{\underline{a}}$

FIG 7

$12^{\underline{a}}$ $13^{\underline{a}}4$ $19^{\underline{a}}$

$13'^{\underline{a}}4$ $19^{\underline{a}}1$

FIG 8

94 95

90 $90^{\underline{i}}$ 91 $90^{\underline{i}}$

FIG 9

92 $90^{\underline{a}}$ $91^{\underline{a}}$ 93

60

FIG 10

68 70 71 72 74 75 76 78 66 64 62
69 73 Step motor Pulse gen Comparator Inhibit
p/t c/r c/r p/t
65 77 80 79
63
67 61

## EUROPEAN SEARCH REPORT

European Patent Office

| | DOCUMENTS CONSIDERED TO BE RELEVANT | | EP 82 30 2658 |

| Category | Citation of document with indication, where appropriate, of relevant passages | Relevant to claim | CLASSIFICATION OF THE APPLICATION (Int. Cl. 3) |
|---|---|---|---|
| X | US - A - 3 995 156 (ANGERSBACH et al.)  <br><br> * claims 12,13 *  <br><br> -- | 1-7 | G 01 D 5/36 <br> 19/12 <br> G 01 B 7/30 <br> B 60 Q 1/10 |
| Y | US - A - 4 143 267 (JOHNSON et al) <br><br> * column 1, lines 24-30 * <br><br> -- | 1-7 | |
| Y | US - A - 3 030 513 (BAYLISS et al) <br><br> * figure 4; column 8, line 73 - column 9, line 14 * <br><br> -- | 1-7 | |
| A | US - A - 4 221 328 (KRAMER) | | **TECHNICAL FIELDS SEARCHED (Int. Cl. 3)** |
| A | US - A - 3 648 276 (SCHUMAN) <br><br> ------- | | G 01 D |

~~The present search report has been drawn up for all claims~~

| Place of search <br> The Hague | Date of completion of the search <br> 14-01-1983 | Examiner <br> IVES |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent
Office

---

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

---

## ☒ LACK OF UNITY OF INVENTION

The Search Division considers that the present European patent application does not comply with the requirement of unity of invention and relates to several inventions or groups of inventions,

namely:

1. claims 1-7, An interceptor member
2. claims 8-20, Measuring vehicle axle loading
3. claims 21-25, Sensing tilt of vehicle

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims: 1-7